# EUROPEAN PATENT APPLICATION

(11) **EP 2 728 721 A2**
(43) Date of publication of application: **07.05.2014**
(21) Application number: 13158330.4
(22) Date of filing: 08.03.2013
(51) Int. Cl.: H02K 29/03

(54) **Rotor and motor and/or electric vehicle driving apparatus including the same**

(30) Priority: 01.11.2012 KR 20120123066
(71) Applicant: LG Electronics, Inc., Seoul 150-721 (KR); IUCF-HYU (Industry-University Cooperation Foundation Hanyang University), Seoul 133-791 (KR)
(72) Inventor: KIM, Youngboong, Seoul 151-851 (KR); DO, Sanghwa, 463-480 Gyeonggi-do (KR); HONG, Jungpyo, 138-891 Seoul (KR); LEE, Byeonghwa, 660-905 Gyeongsangnam-do (KR); HAN, Seungdo, Seoul 151-851 (KR); LIM, Hokyoung, Seoul 151-851 (KR)
(74) Representative: Vossius & Partner

(57) **Abstract**

A motor includes a plurality of tooth bodies extending from a rotor core. A pole shoe extends from an end of at least one tooth body at opposite sides where both sides of the pole shoe have a curved outer part opposite to each other and asymmetric to each other in that a radius of curvature of the curved outer part of the one side of the pole shoe that is in a rotational direction of the rotor has a smaller radius than a radius of curvature of the other side of the pole shoe that is not in the rotational direction of the rotor.

## Description

The present disclosure relates to a rotor and a motor including the same. Also, the present disclosure relates to an electric vehicle driving apparatus and an electric vehicle including the same. More particularly, the present disclosure relates to a motor or an electric vehicle driving apparatus including a field winding rotor.

Generally, a vehicle is driven by an engine. Various carbon-based fuels, such as gasoline and diesel oil, are used to drive the engine. As a result, a large amount of carbon gas is discharged. For this reason, much research has been conducted into an electric vehicle or a hybrid vehicle using a battery to reduce an amount of carbon gas discharged from the vehicle.

An electric vehicle is a vehicle having a motor which is driven by a battery. A hybrid vehicle is a vehicle selectively using an engine or a motor as needed. Consequently, a hybrid vehicle may be regarded as an electric vehicle. This is because the hybrid vehicle includes a driving motor using a battery.

The performance of an electric vehicle using a motor has a very close relation with the performance of the motor. That is, the performance of the motor may have an influence upon the performance of the electric vehicle. Consequently, the performance of the motor is very important.

Even in a general motor as well as a driving motor for electric vehicles, it is preferable to maximally reduce torque ripple. Torque ripple is a phenomenon where output torque is not uniformly generated. Such torque ripple disturbs stable output and induces vibration and noise from a motor.

Also, torque ripple makes it more difficult to control the motor. This is because an output torque value may be fed back as an abnormal torque ripple value instead of a present average output torque value. For this reason, it is very preferable to reduce such a torque ripple value. In a large-sized motor, particularly a driving motor for electric vehicles, it is very important to reduce torque ripple.

A method of applying sinusoidal current to reduce torque ripple has been proposed. In this method, however, it is not easy to form current distributed in a gap between a stator and a rotor into a full sinusoidal current wave. As a result, the reduction of torque ripple through application of sinusoidal current is restricted.

Also, a method of skewing the shape of the rotor to reduce torque ripple has been proposed. That is, this is a method of forming the shape of the rotor so that a magnetic pole is sequentially changed from the longitudinal front of the rotor to the longitudinal rear of the rotor as the rotor is rotated. Consequently, it is possible to prevent the magnetic pole from being abruptly changed, thereby reducing torque ripple. In this method, however, it is not easy to manufacture the rotor.

Also, in the above methods, output torque is reduced. In addition, for a field winding motor, it is not easy to change the shape of the rotor. This is because it is necessary to wind a field coil on the rotor. Particularly for the field winding motor, it is difficult to skew the shape of the rotor, and it is more difficult then to wind a field coil on the rotor.

In addition, for the field winding motor, centrifugal force is very large since the field coil as well as a rotor core is rotated. Particularly in the driving motor for electric vehicles, the radius of the stator may exceed 100 mm. The size of the rotor is increased in proportion to that of the stator, and therefore, the rotor is very heavy. In addition, the weight of the rotor may be increased due to the field coil.

Consequently, designing the shape of the rotor is restricted due to large centrifugal force caused by the rotation of the rotor.

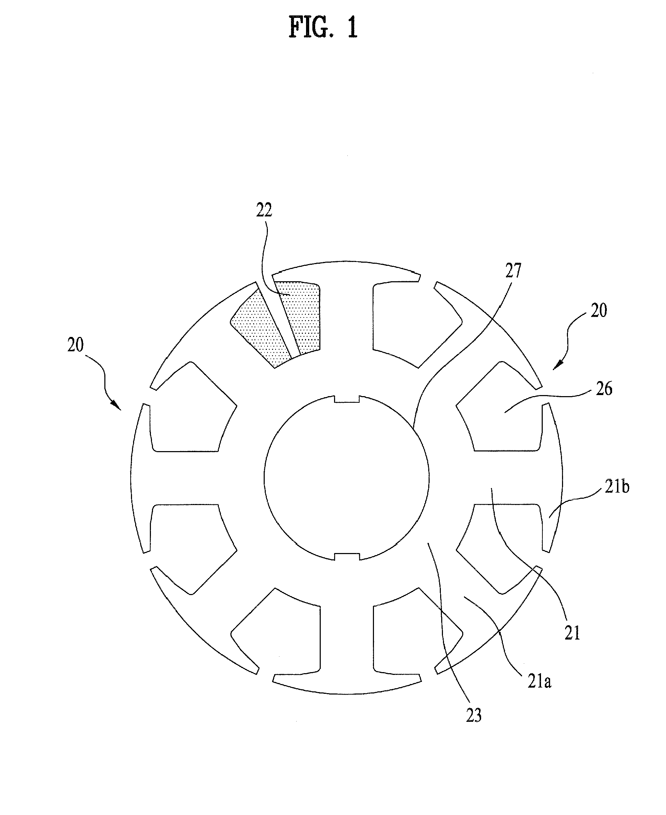

FIG. 1 is a plan view showing an example of a conventional rotor 20.

The rotor 20 includes an annular rotor core 23 and a plurality of tooth bodies 21a extending from the rotor core 23 in the radial direction. A pole shoe 21b extends from the end of each of the tooth bodies 21a in opposite sides in the circumferential direction. One tooth body 21a and one pole shoe 21b constitute one tooth 21.

A slot 26 is formed between every neighboring teeth. A rotor coil 22 may be wound on each tooth 21 through the slot 26. Specifically, the rotor coil 22 may be wound on each tooth body 21a through the slot 26.

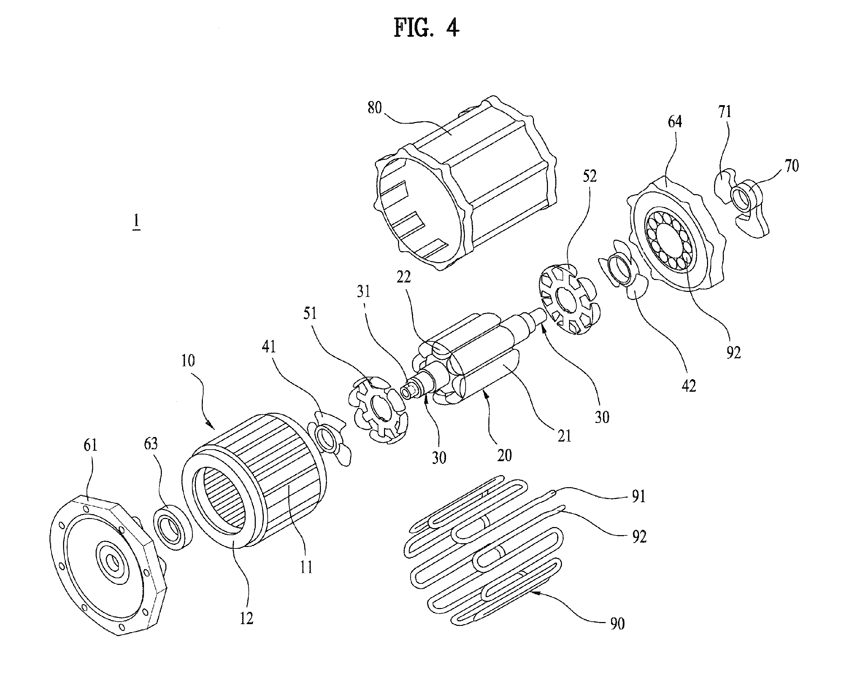

A radial part inside of the rotor core 23 forms a rotary shaft coupling hole 27 to which a rotary shaft (see FIG. 4) is coupled.

Generally, each tooth 21 is formed in a symmetrical fashion with respect to the middle thereof. Particularly, the pole shoe 21b is formed in a symmetrical fashion. A radial outer edge of the pole shoe 21b is opposite to the inside of the stator. Consequently, a uniform air gap is defined between the pole shoe 21b and the stator.

The symmetrical structure of each tooth 21 affects output torque, torque ripple, and centrifugal force of the field coil 22. For this reason, it is very difficult to design the shape of the rotor satisfying all of the conditions. Particularly, it is more difficult to design the shape of the teeth 21 due to increase in centrifugal force of the rotor caused by the addition of the field coil 22.

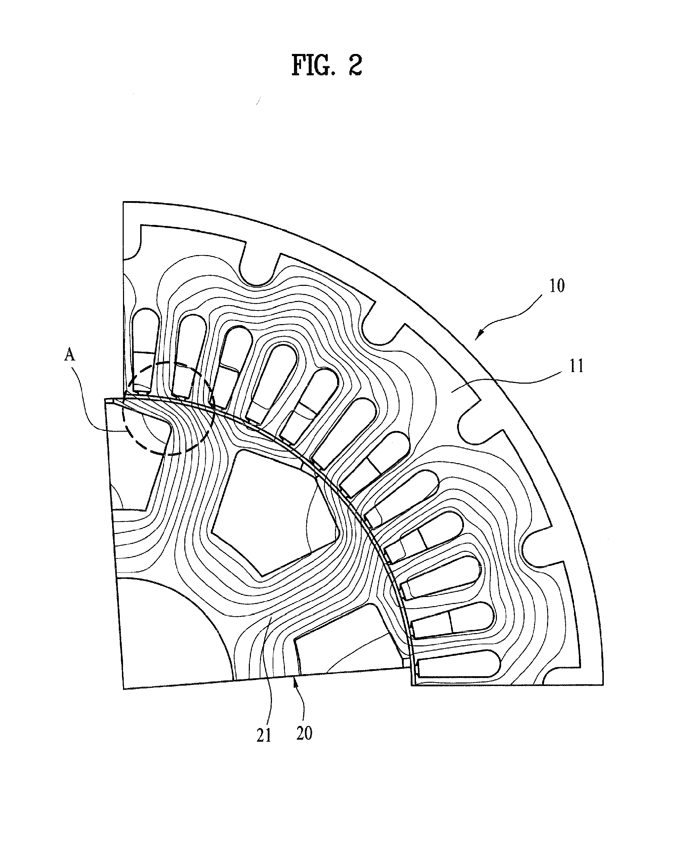

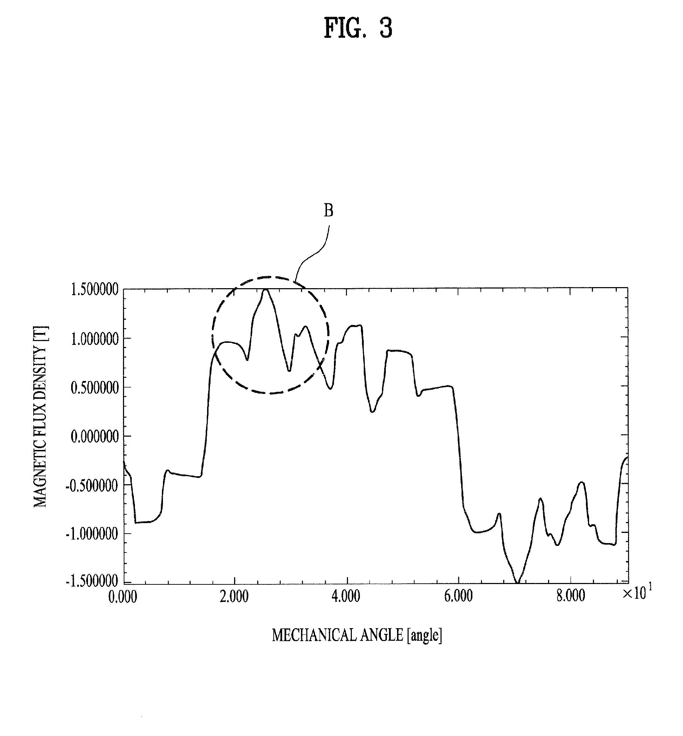

FIGs. 2 and 3 show magnetic flux lines and magnetic flux density of a motor including the field winding rotor shown in FIG. 1.

When the rotor 20 is rotated inside the stator 10, specifically inside the stator core 11, in the counterclockwise direction, magnetic flux density may be saturated at a specific rotational position of the rotor 20. That is, magnetic flux density may be saturated at the end of each tooth, i.e. at each poly shoe, at the rotational position of the rotor 20 shown in FIG. 2. In other words, magnetic flux lines may be very narrowly formed at position A shown in FIG. 2 with the result that magnetic flux density may be saturated at position A. This can be seen from the fact that magnetic flux density is rapidly increased at position B shown in FIG. 3.

Whenever the rotor 20 reaches position A as the rotor 20 is rotated, magnetic flux density is saturated, and therefore, torque ripple is periodically increased. For this reason, it is desirable to provide a rotor that is capable of reducing torque ripple and retaining output torque and a motor or a driving apparatus including the same.

Meanwhile, saturation of magnetic flux density causes loss of magnetic flux. As a result, motor efficiency is lowered, and the maximum output torque is reduced.

Consequently, it is particularly desirable to provide a field winding rotor that is capable of reducing torque ripple and retaining output torque, thereby improving efficiency, and a motor including the same. This is because, for the field winding rotor, it is very difficult to change the shape of the rotor.

Accordingly, the present disclosure is directed to a rotor and a motor an electric vehicle and/or a method thereof that substantially obviate one or more problems due to limitations and disadvantages of the related art.

An object is to provide a rotor that is capable of reducing torque ripple, thereby improving performance, and a motor including the same. In particular, another object devised to salve the problem lies on a driving motor for electric vehicles including a field winding rotor.

Another object is to provide a field winding rotor in which the shape of the rotor is not greatly changed to minimize influence from centrifugal force, thereby effectively reducing torque ripple while retaining output torque, and a driving motor for electric vehicles including the same.

A further object is to provide a coil winding rotor and/or a driving motor including the coil winding rotor for electric vehicles that can be easily controlled and manufactured.

Additional advantages, objects, and features of the disclosure will be set forth in part in the description which follows and in part will become apparent to those having ordinary skill in the art upon examination of the following or may be learned from practice of the invention. The objectives and other advantages may be realized and attained by the structure particularly pointed out in the written description and claims hereof as well as the appended drawings.

To achieve these objects and other advantages and in accordance with the purpose of the invention, as embodied and broadly described herein, a coil winding rotor includes a rotor core; a plurality of tooth bodies extending from the rotor core in a radial direction, the tooth bodies arranged at the rotor core at equal intervals around a surface of the rotor core in a circumferential direction; a rotor coil wound on each of the tooth bodies; and a pole shoe extending from an end of at least one tooth body at opposite sides in the circumferential direction, one side of the pole shoe constituting a side that is in a rotational direction of the rotor and other side of the pole shoe constituting a side that is not in the rotational direction of the rotor, wherein both sides of the pole shoe having a curved outer part opposite to each other and asymmetric to each other in that a radius of curvature of the curved outer part of the one side of the pole shoe that is in the rotational direction of the rotor has a smaller radius than a radius of curvature of the other side of the pole shoe that is not in the rotational direction of the rotor.

To achieve these objects and other advantages and in accordance with the purpose of the invention, as embodied and broadly described herein, a motor including the above coil winding rotor.

To achieve these objects and other advantages and in accordance with the purpose of the invention, as embodied and broadly described herein, a coil winding rotor comprising: an annular rotor core; a rotor coil wound on the rotor core; and a plurality of teeth, each of which has a tooth body extending from the rotor core in a radial direction, the tooth bodies being arranged at equal intervals in a circumferential direction of the rotor core, and a pole shoe extending from an end of the tooth body to opposite sides in the circumferential direction, wherein each of the teeth is provided with a slit to reduce a torque ripple value, and the pole shoe is formed in an asymmetrical fashion with respect to a middle of each of the teeth to compensate reduction of a torque value due to the slit and to further reduce the torque ripple value.

The asymmetrical shape of the pole shoe may be realized in various manners. An extension of the pole shoe located in a rotational direction may be relatively short. That is, when the rotor is rotated in a counterclockwise direction, a left extension of the pole shoe may be relatively short.

Also, the extension of the pole shoe located in the rotational direction may be relatively narrow. That is, a radial width of the pole shoe may be narrow. Specifically, the radial width of the pole shoe may be narrow so that an air gap from a stator is increased. On the other hand, the radial width of the pole shoe may be narrow in a state in which the air gap is uniform. As an example of the latter case, a radial inside of the extension of the pole shoe may be formed in an arc shape.

In any cases, however, the pole shoe may be formed so that the radial width of the pole shoe is narrowed in the radial direction.

The slit may be formed over a portion extending from the tooth body to the pole shoe.

The slit may be skewed so that the slit is substantially perpendicular to a direction in which magnetic flux flows from the tooth body to the pole shoe.

The rotor may be configured to rotate in one direction, and the slit may be formed at a portion of each of the teeth eccentric from a middle of each of the teeth in a rotational direction of the rotor.

The slit may be formed so that a radial outside of the slit is adjacent to the middle of each of the teeth. Also, the slit may be formed at each side of each of the teeth with respect to a middle of each of the teeth. In addition, the slit may have widths different depending upon magnetic flux density.
In another aspect, an electric vehicle includes a battery; a motor coupled to the battery, wherein the motor includes a stator having an armature coil wound thereon; a rotor is rotatable inside the stator, wherein the rotor includes a rotor core; a plurality of tooth bodies extending from the rotor core in a radial direction, the tooth bodies arranged at the rotor core at equal intervals around a surface of the rotor core in a circumferential direction; a rotor coil wound on each of the tooth bodies; and a pole shoe extending from an end of at least one tooth body at opposite sides in the circumferential direction, one side of the pole shoe constituting a side that is in a rotational direction of the rotor and other side of the pole shoe constituting a side that is not in the rotational direction of the rotor, wherein both sides of the pole shoe having a curved outer part opposite to each other and asymmetric to each other in that a radius of curvature of the curved outer part of the one side of the pole shoe that is in the rotational direction of the rotor has a smaller radius than a radius of curvature of the other side of the pole shoe that is not in the rotational direction of the rotor

The slit may extend to each of the tooth bodies, and the pole shoe may be formed in an asymmetrical fashion with respect to the middle of each of the tooth bodies to compensate reduction of a torque value due to the slit and to further reduce the torque ripple value.

The stator may have 8 poles and 48 slots, and the rotor may have 8 poles and 8 slots.

According to embodiments of the present invention, it is possible to provide a rotor, particularly a field winding rotor, and a motor including the same. The motor may be a driving motor for electric vehicles. Also, the motor may further include a stator having an armature coil wound thereon. Consequently, it is possible to provide a driving motor for electric vehicles that controls a field current value applied to the field coil and an armature current value applied to the armature coil to control output.

It is to be understood that both the foregoing general description and the following detailed description are exemplary and explanatory and should not be construed as limiting the scope of the claims.

The accompanying drawings, which are included to provide a further understanding of the disclosure and are incorporated in and constitute a part of this application, illustrate embodiment(s) of the invention and together with the description serve to explain the principle of the invention. In the drawings:

FIG. 1 is a sectional view showing a conventional rotor;

FIG. 2 is a sectional view showing magnetic flux distribution between a rotor and a stator shown in FIG. 1;

FIG. 3 is a graph showing a relationship between rotational positions of the rotor shown in FIG. 1 and magnetic flux density;

FIG. 4 is an exploded perspective view showing a motor including a rotor according to an embodiment of the present invention;

FIG. 5 is a block diagram of a field winding motor applicable to an embodiment of the present invention;

FIGs. 6 to 11 are partial sectional views showing shapes of rotors according to various embodiments of the present invention; and

FIGs. 12 to 14 are tables showing toque ripple reduction effects and output torque retention effects according to various embodiments of the present invention.

Reference will now be made in detail to the preferred embodiments of the present invention, examples of which are illustrated in the accompanying drawings. Wherever possible, the same reference numbers may be used throughout the drawings to refer to the same or like parts.

FIG. 4 is an exploded perspective view showing a motor or a driving motor 1 for electric vehicles applicable to embodiments of the present invention. Specifically, FIG. 4 shows an embodiment of a field coil motor 1.

The motor 1 may include a stator 10 and a rotor 20. The rotor 20 is rotated relative to the stator 10 through electromagnetic interaction with the stator 10.

The stator 10 may include a stator core 11. Also, the stator 10 may include a stator coil 12 to form magnetic flux. The stator coil 12 is wound on the stator core 11. Consequently, the stator 10 may be an electromagnet.

The rotor 20 may be rotatably disposed inside the stator 10.

The rotor 20 may include teeth 21. Also, the rotor 20 may include a rotor coil 22 wound on each of the teeth 21.

The rotor coil 22 may be a field coil, and the stator coil 12 may be an armature coil. Consequently, output of the rotor 20 may be controlled based on a field current value and an armature current value applied to the field coil and the armature coil, respectively.

The rotor 20 is connected to a rotary shaft 30. The rotary shaft 30 may be connected to a drive shaft of a vehicle (not shown). Consequently, torque and RPM of the rotor 20 may be transmitted to the drive shaft of the vehicle via the rotary shaft 30. For connection between the rotary shaft 30 and the drive shaft, a hollow part 31 may be formed in the rotary shaft 30. The connection between the rotary shaft 30 and the drive shaft is achieved by inserting the drive shaft into the hollow part 31.

The connection between the rotary shaft 30 and the drive shaft is easily achieved by the provision of the hollow part 31. Also, the increase in length of the motor or driving apparatus due to the connection between the rotary shaft 30 and the drive shaft is prevented. In addition, it is not necessary to provide an additional space for connection between the rotary shaft 30 and the drive shaft outside the motor.

End plates 51 and 52 may be provided at the front and rear of the rotor 20, respectively. The field coil 22 may be stably fixed by the end plates 51 and 52. That is, the field coil 22 may be stably fixed to each of the teeth 21 by the end plates 51 and 52 even when the field coil 22 is rotated.

A front bracket 61 and a rear bracket 62 may be provided at the front and rear of the stator 10 and the rotor 20, respectively. In addition, a frame 80 may be provided to surround the stator 10 and the rotor 20. The stator 10 and the rotor 20 may be disposed in the brackets and the frame.

A front bearing 63 may be provided at the front of the rotary shaft 30, and a rear bearing 64 may be provided at the rear of the rotary shaft 30. The rotor 20 and the rotary shaft 30 may be rotatably supported with respect to the brackets through the bearings. The bearings are supported by the respective brackets. Consequently, the brackets 61 and 62 may be bearing housings.

The stator 10 may be stably fixed to the inside of the frame 80. In addition, opposite sides of the frame 80 may be coupled to the front bracket 61 and the rear bracket 62, respectively.

A cooling tube 90 may be provided to prevent overheating of the motor. The cooling tube 90 may be configured in the form of a coil. The cooling tube 90 may be interposed between the stator 10 and the frame 80. A coolant may flow through the cooling tube to directly cool the stator 10 and the frame 80. That is, the cooling tube 90 may be in direct contact with the stator 10 to cool the stator 10 through heat conduction.

In addition, an air flow induction device may be provided to induce air flow in the motor 1, specifically an inner space defined by the frame 80 and the brackets. The air flow induction device may be configured in the form of fans or blades 41 and 42. The blades 41 and 42 are coupled to the rotary shaft 30 so that the blades can be rotated together with the rotary shaft. In addition, the blades 41 and 42 may be provided at the front and rear of the rotary shaft 30, respectively.

A pair of slip rings 70 and a pair of brushes 71 may be provided outside the rear bracket 62. The slip rings 70 are coupled to the rotary shaft 30. Field current flows to the field coil 22 via the slip rings 70.

That is, the slip rings 70 and the brushes 71 are configured so that field current from outside the rotor 20 can flow to the afield coil 22. In other words, the field current may be supplied from a DC power supply (for example, a battery) via the brushes 71 and the slip rings 70.

Meanwhile, the rear bracket 62 may be formed to fix an inlet port 91, through which a coolant is supplied to the cooling coil 90, and an output port 92, through which the coolant is withdrawn, or to connect the inlet port 91 and the output port 92 to the outside. In addition, a connection part to supply armature current may be provided at the rear bracket 62.

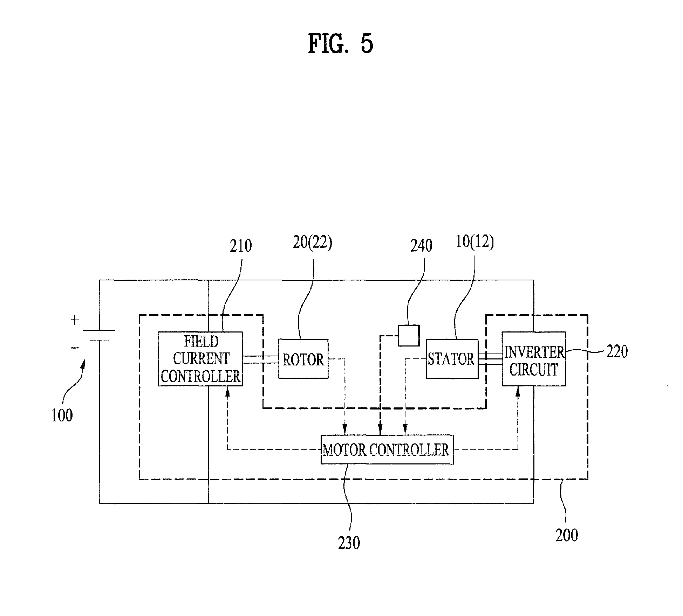

Hereinafter, a circuit to control the motor 1 and a motor control unit will be described in detail with reference to FIG. 5.

DC power from a battery 100 is supplied to the motor 1. Specifically, the field coil (rotor coil) 22 and the armature coil (stator coil) 12 may be connected to each other in parallel.

A field current value applied to the field coil and an armature current value applied to the armature coil may be decided by a motor controller 230. The field current value decided by the motor controller 230 may be applied to the field coil 22 via a field current controller 210. In addition, the armature current value decided by the motor controller 230 may be applied to the armature coil 12 via an inverter circuit 220. FIG. 3 shows an example in which DC current is converted into three phase AC current by the inverter circuit 220 and is then applied to the armature coil. Consequently, the motor controller 230 may include an inverter driving unit to drive the inverter circuit 220.

The field current controller 210, the motor controller 230, and the inverter circuit 220 may be integrated into a single unit. That is, these components may be integrated into a single unit for easy manufacture, handling, and installation. Consequently, these components may be referred to as a motor control unit 200. In addition, the motor control unit 200 may be referred to as an inverter. In this case, the inverter may be regarded as including the field current controller 210, an inverter driving circuit (not shown), and the inverter circuit 220.

The motor controller 230 or the motor control unit 200 may receive a large amount of information from the rotor 20 and the stator 10. For example, the motor controller 230 or the motor control unit 200 may receive information regarding present RPM and torque of the rotor 20 and temperature of the stator 10. In addition, the motor controller 230 or the motor control unit 200 may calculate a present command torque or receive information for calculation of the command torque.

In addition, a temperature sensor 240 may be provided to sense temperature of the motor 1. The temperature sensor 240 may sense temperature of the motor 1 and transmit the sensed temperature of the motor 1 to the motor controller 230.

Consequently, the motor controller 230 or the motor control unit 200 may control the field current value and the armature current value to be properly applied based on a command torque and status information (an output torque, RPM, temperature, voltage value, and current value). That is, the motor controller 230 or the motor control unit 200 may perform feedback control.

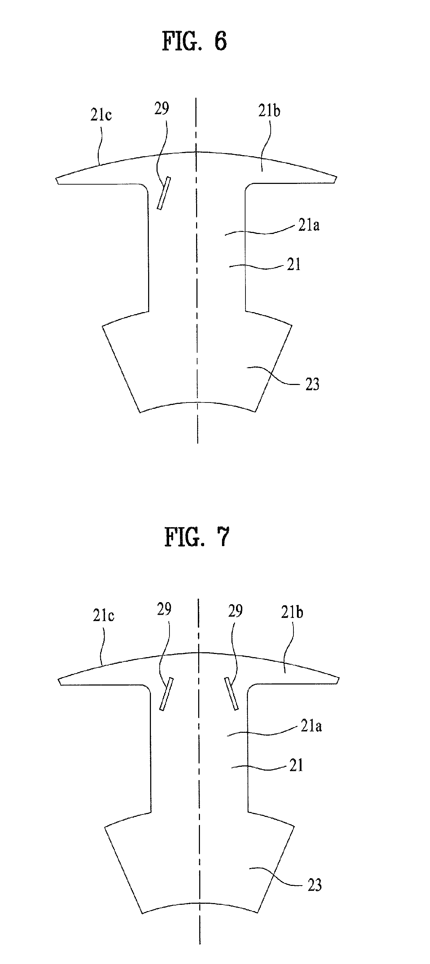

Hereinafter, rotors according to embodiments of the present invention will be described in detail with reference to FIGs. 6 to 11. In FIGs. 6 to 11, only one tooth 21 is shown for each drawings for the sake of convenience. The rotors according to the embodiments of the present invention are **characterized in that** the shape of each of the rotors according to the embodiments of the present invention is not greatly different from that of the rotor shown in FIG. 1. Consequently, the same elements are denoted by the same reference namerals, and a detailed description thereof will be omitted.

As previously described, it can be seen that a torque ripple value of the tooth 21 is increased due to magnetic flux saturation. As shown in FIG. 6, therefore, a slit 29 may be formed at a portion of the tooth 21 at which such magnetic flux saturation may occur in order to prevent the occurrence of the magnetic flux saturation.

The slit 29 may be formed in the shape of an air slit. Also, the slit 29 may be formed in an irregular shape. Further, the slit 29 may be formed in a circular shape or an oval shape._ The air slit exhibits a magnetic resistance characteristic itself. Consequently, magnetic resistance is increased at the portion of the tooth 21 at which the slit 29 is formed, thereby reducing magnetic flux density. It is possible to decrease torque ripple through the reduction of such magnetic flux density.

That is, as shown in FIG. 6, it is possible to decrease torque ripple without changing the shape of a pole shoe 21b and the shape of an edge 21c of a radial end of the pole shoe 21b. In other words, it is possible to decrease torque ripple without changing the shape of a circumferential extension of the pole shoe 21b. In addition, it is possible to decrease torque ripple even in a state in which the circumferential extension of the pole shoe 21b is formed in a symmetrical fashion.

The slit 29 is formed at the tooth 21. More specifically, the slit 29 may extend from a tooth body 21a to the pole shoe 21b. Also, the slit 29 may be formed at the pole shoe 21b. In this case, the slit 29 may extend from the pole shoe 21b to the tooth body 22a.

Magnetic flux lines from the tooth body 21a flow to the pole shoe 21b. However, the radial width of the pole shoe 21b is less than the circumferential width of the tooth body 21a. When the magnetic flux lines flow from the tooth body 21a to the pole shoe 21b in the circumferential direction, the distance between the magnetic flux lines becomes very narrow. This means the increase of magnetic flux density.

For this reason, the slit 29 may be formed over a portion extending from the tooth body 21a to the pole shoe 21b. That is, the slit 29 may be formed at a portion at which magnetic flux saturation may occur. The slit 29 generates magnetic resistance, thereby preventing the occurrence of magnetic flux saturation. Also, the slit 29 allows magnetic flux to flow to the stator 10 through the pole shoe 21b, thereby reducing torque ripple.

As shown in FIG. 2, magnetic flux saturation may occur at the pole shoe 21b located in the rotational direction. Consequently, as shown in FIG. 6, the slit 29 may be formed at a portion of the tooth 21 eccentric from the middle of the tooth 21 in the rotational direction.

Meanwhile, magnetic resistance generated by the slit 29 may be further increased as the slit is located perpendicular to magnetic flux lines. That is, when the slit 29 is located perpendicular to magnetic flux lines, the number of magnetic flux lines per unit length of the slit is increased. Consequently, the slit 29 is skewed so that the slit is substantially perpendicular to magnetic flux lines, thereby further increasing magnetic resistance.

On the other hand, the slit 29 may not be formed so that the slit it perpendicular to magnetic flux lines. This is because the number of magnetic flux lines, the magnetic flux direction of which is changed due to the slit may be unnecessarily increased. In this case, the number of magnetic flux lines which do not affect output torque may be increased. Consequently, an angle of the slit 29 with respect to magnetic flux lines or an angle of the slit 29 with respect to the middle of the tooth body 21 may be optimally selected.

The slit 29 reduces torque ripple. As expected, however, the slit 29 may reduce an output torque value. This is because magnetic resistance is formed on a path along which magnetic flux flows. Consequently, the output torque value may be slightly reduced due to distortion of the magnetic flux path.

Mearwhile, the middle of the slit 29 may be further eccentric from the middle of the tooth 21 in the rotational direction. Also, the middle of the slit 29 may not be eccentric to the pole shoe 21b but to the tooth body 21a.

The middle of the slit 29 is located as described above to minimize the reduction of output torque due to the slit 29. This is because it is possible to prevent the flow direction of magnetic flux lines from being abruptly changed due to the position of the slit 29.

The pole shoe 21b is a radial end of the tooth 21. If magnetic resistance is concentrated on the pole shoe 21b, the flow direction of magnetic flux lines may be abruptly change at the end of the tooth 21. This means that leakage of magnetic flux may be increased and, in addition, that the reduction of output torque may be increased.

In order to minimize the reduction of output torque due to the slit 29, the tooth body 21a may be formed to have a large amount of magnetic resistance. To this end, the slit 29 may be located at the tooth body 21a.

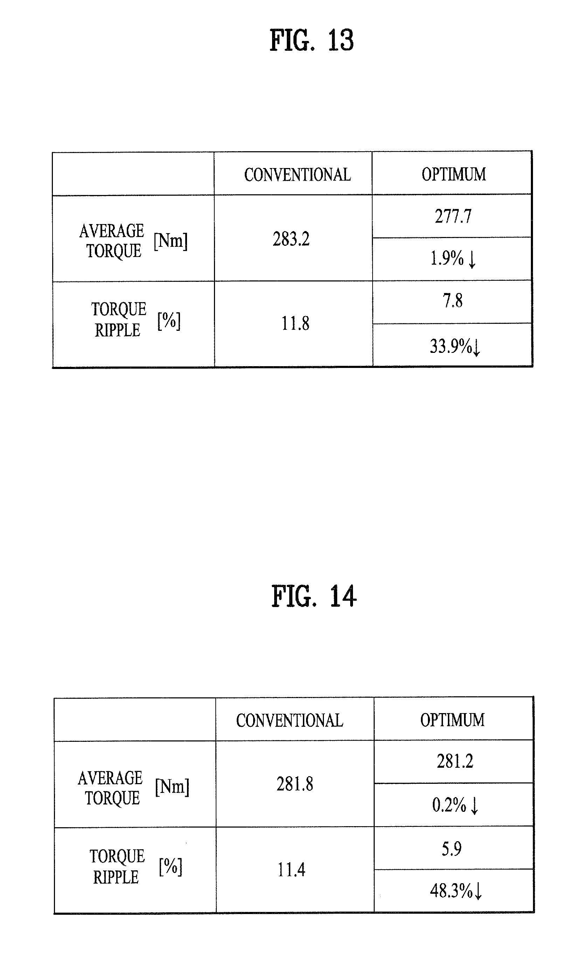

A toque ripple reduction effect and an output torque retention effect according to the embodiment of the present invention shown in FIG. 6 may be seen from a table shown in FIG. 13, which will hereinafter be described in detail.

In the tooth 21 shown in FIG. 6, meanwhile, the left and right shapes of the tooth 21 with respect to the middle thereof are the same but the left and right weights of the tooth 21 are different from each other. As a result, torque ripple may be generated due to weight difference. For this reason, as shown in FIG. 7, slits 29 may be formed at the left and right sides of the tooth 21 so that the slits 29 are symmetric with respect to the middle of the tooth 21.

However, as one of the slits 29 is formed at a portion of the tooth 21 in the direction opposite to the rotational direction, magnetic resistance is increased, as expected, and therefore, output torque (average output torque) may be slightly reduced. This is because one of the slits 29 is formed at a portion of the tooth 21 at which magnetic flux saturation does not occur, and therefore, leakage of magnetic flux may occur.

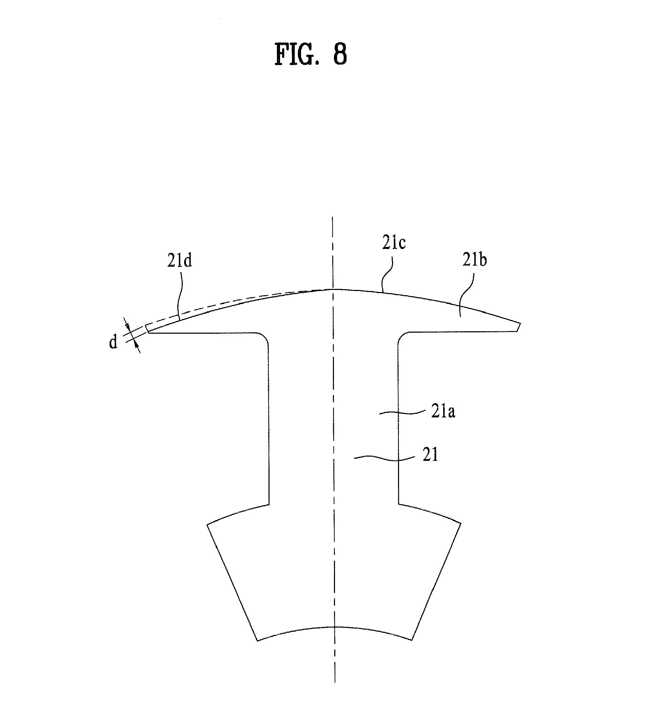

FIG. 8 shows an embodiment of a rotor in which the shape of a radial outer edge of a pole shoe 21b is changed so that air gap between the tooth 21 and the stator are formed in an asymmetrical fashion.

Specifically, a pole shoe edge 21d located in the rotational direction and a pole shoe edge 21c located in the direction opposite to the rotational direction may be formed in an asymmetrical fashion. That is, the pole shoe may be formed so that the left and right sides of the pole shoe are symmetric with respect to the middle of the tooth 21.

As shown, the asymmetric structure may be configured so that the right side of the tooth 21 has an air gap equal to the conventional air gap, but the left side of the tooth 21 (located in the rotational direction) has an air gap greater than the conventional air gap. Also, the air gap may be formed so as to be gradually increased in the rotational direction. This may be achieved by gradually increasing a gap d shown in FIG. 8 in the rotational direction.

Also, circumferential extension lengths of the pole shoe may be formed in an asymmetrical fashion. That is, a circumferential extension of the pole shoe located in the rotational direction may be relatively short, and a circumferential extension of the pole shoe located in the direction opposite to the rotational direction may be relatively long. That is, the circumferential extension lengths of the pole shoe may be different from each other. Also, radial widths of the pole shoe may be formed in an asymmetrical fashion.

As shown, the left air gap may be increased by a maximum of d due to the shape of the pole shoe 21b. As the air gap is increased, magnetic resistance is increased. In addition, as the circumferential extension lengths of the pole shoe are decreased, magnetic resistance is increased.

As the air gap of the pole shoe 21b located in the rotational direction is increased, magnetic resistance is increased, and therefore, magnetic flux density is decreased. That is, the number of magnetic flux lines flowing to the pole shoe 21b located in the rotational direction is reduced. As a result, magnetic flux saturation is partially reduced, and therefore, torque ripple is reduced. In addition, the air gap may be gradually increased toward the circumferential end of the pole shoe 21b to more effectively reduce torque ripple.

Also, the increase of the air gap, i.e. the gap d, does not distort a magnetic flux path unlike the abovementioned slit 29. Nevertheless, it is possible to reduce torque ripple. Consequently, retention or increase of output torque may be achieved.

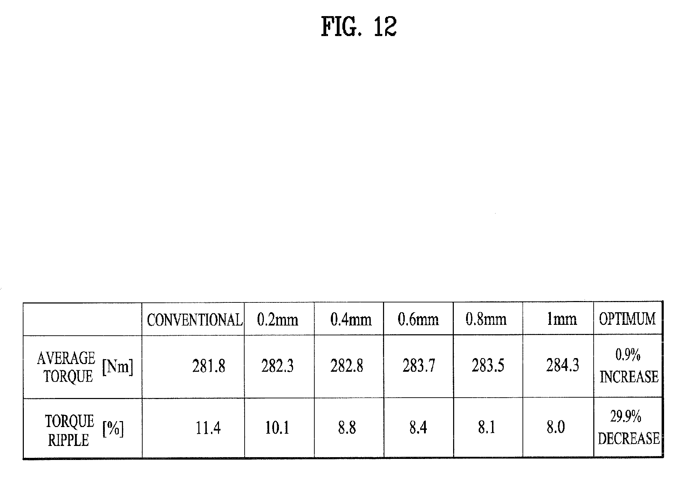

A toque ripple reduction effect and an output torque retention effect according to the embodiment of the present invention shown in FIG. 8 may be seen from a table shown in FIG. 12, which will hereinafter be described in detail.

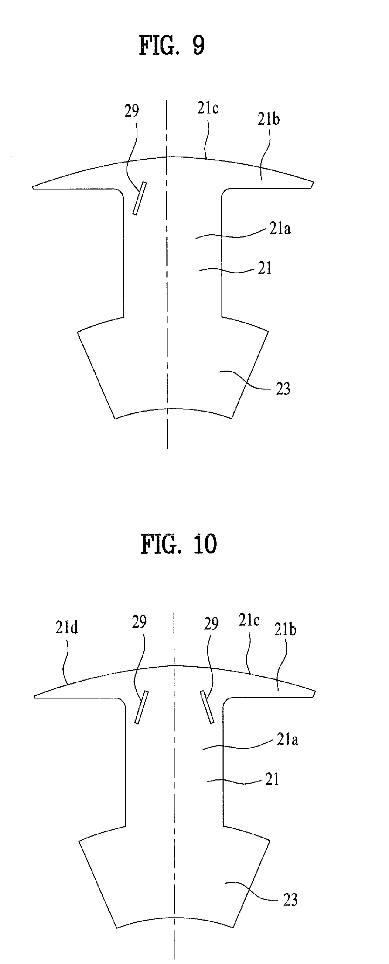

FIG. 9 shows an embodiment to which the embodiment shown in FIG. 6 and the embodiment shown in FIG. 8 are applied compositively.

That is, FIG. 9 shows an embodiment in which a pole shoe 21b and a slit 29 are formed at the tooth 21 and the left and right sides of the pole shoe 21b are asymmetric with respect to the middle of the tooth 21. The asymmetric pole shoe 21b and slit 29 may have the abovementioned effects.

In this embodiment, however, it is possible to minimize influence on output torque and, in addition, to reduce a torque ripple value.

As previously described, the torque ripple value may be reduced through the slit 29. Also, the torque ripple value may be reduced through the asymmetric shape of the pole shoe. In addition, the reduction of an output torque value may be minimized through the slit or the asymmetric shape of the pole shoe.

As will hereinafter be described, on the other hand, it is possible to further reduce a torque ripple value and to minimize the reduction of an output torque value or to retain the output torque value by applying both the slit and the asymmetric shape of the pole shoe. Specifically, the reduction of the output torque value may be compensated by the asymmetric shape of the pole shoe.

As previously described, the flow of magnetic flux may be distorted due to the slit 29 with the result that an output torque value may be reduced. In this case, however, the distorted magnetic flux may flow to the stator due to the asymmetric shape of the pole shoe. That is, the distorted magnetic flux may flow to a position at which the air gap is narrow, and therefore, leakage of magnetic flux may be minimize. In other words, the flow direction of magnetic flux lines having little influence on output torque may be changed into the flow direction of magnetic flux lines having much influence on output torque.

In addition, it is possible to minimize a torque ripple value due to the asymmetric shape based on the gap d. This means that, as the torque ripple value is reduced, output torque may further increased. That is, as will hereinafter be described, output toque may be increased based on the gap d. Consequently, the increase of output torque based on the gap d may compensate the reduction of output torque due to the slit 29.

A toque ripple reduction effect and an output torque retention effect according to the embodiment of the present invention shown in FIG. 9 may be seen from a table shown in FIG. 14, which will hereinafter be described in detail.

FIG. 10 shows an embodiment to which the embodiment shown in FIG. 7 and the embodiment shown in FIG. 8 are applied compositively. Consequently, characteristics of the embodiment shown in FIG. 10 may be similar to those of the embodiments shown in FIGs. 6 to 9.

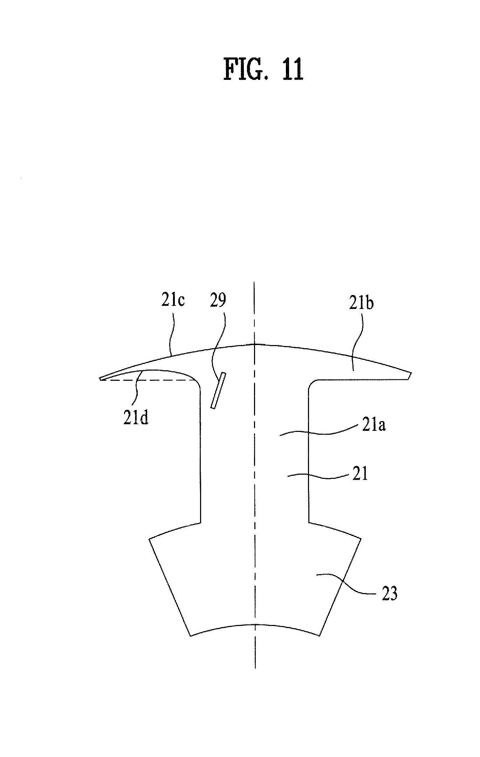

FIG. 11 shows an embodiment in which the asymmetric shape of a pole shoe is not realized by the difference between air gaps or the difference between left and right sides of the pole shoe but by the difference between inner shapes of the pole shoe.

In the same manner, radial widths of the pole shoe may be formed in an asymmetrical fashion due to the asymmetric shape of the pole shoe. However, the air gap at a radial edge 21c of the pole shoe may be uniform in the circumferential direction.

For the pole shoe located in the rotational direction, the radial inner side of the pole shoe may be formed in the shape of an arc. That is, the radial inner side of the pole shoe may not be formed in the tangential direction but in an upwardly convex shape. Such a shape of the pole shoe prevents the flow direction of magnetic flux from being abruptly changed. Consequently, magnetic flux from the tooth body 21a may be smoothly introduced into the pole shoe 21b and then from the pole shoe 21b into the stator 10. Although the radial width is narrowed, leakage of magnetic flux due to the air gap may be minimized. In addition, smooth flow of magnetic flux is possible, and therefore, partial magnetic flux saturation may be prevented. Consequently, it is possible to reduce torque ripple, thereby increasing output torque.

Also, one slit 29 may be further formed to further reduce torque ripple. That is, the flow direction of magnetic flux introduced into the pole shoe and leating from the pole shoe may be changed due to the slit 29.

Consequently, a toque ripple reduction effect and an output torque retention or increase effect are more improved than in the embodiment shown in FIG. 9. This is because magnetic flux may more smoothly flow due to the inner arc shape of the pole shoe.

Also, the asymmetric shape of the pole shoe may be realized by the difference between a radial inner shape and a radial outer shape of the pole shoe. That is, the characteristics shown in FIG. 8 may be added to the characteristics shown in FIG. 11. In other words, the radial outer shape of the pole shoe may be realized in an asymmetrical fashion based on different radii of curvature.

Specifically, the radius of curvature of the radial outer part of the pole shoe located in the rotational direction (the left side of the pole shoe) may be less than that of the radial outer part of the right side of the pole shoe. In this case, output torque performance may be improved. In addition, the radial inner part of the pole shoe located in the rotational direction (the left side of the pole shoe) may be formed in an arc shape to further reduce torque ripple.

Meanwhile, in the above embodiments, the width of the slit 29 may not be uniform. That is, the width of a portion having high magnetic flux density may be increased to increase magnetic resistance, and the width of a portion having low magnetic flux density may be increased to decrease magnetic resistance. In the above embodiments, therefore, the shape of the slit 29 is not limited to a specific one.

In the above embodiments, the rotor 20 may be a rotor of a field winding motor. The motor may include a stator having an armature coil wound thereon.

Also, the motor may be a driving motor for electric vehicles. The driving motor may be controlled so that a field current value of a maximum of 9.8 to 10 A is input to the driving motor through a battery. In addition, the armature coil may be controlled so that three phase current is input to the armature coil through an inverter circuit.

The maximum output of the motor may be 280 Nm or more, and the radius of the stator 10 may be 100 to 110 mm.

The rotor may have 8 slots, and the field coil may be wound on the rotor so that the rotor has 8 poles. Also, the stator may have 48 slots, and the armature coil may be wound on the stator so that the stator has 8 poles.

Hereinafter, toque ripple reduction effects and output torque retention effects according to the above embodiments of the present invention will be described with reference to FIGs. 12 to 14. Average torque shown in FIGs. 12 to 14 may be an average value of output torques obtained when the maximum torque is commanded.

FIG. 12 shows a relationship between torque ripple and average torque in a case in which the gap d is changed in the embodiment shown in FIG. 8. That is, FIG. 12 shows experimental results of the embodiment in which the shape of the pole shoe is formed in an asymmetrical fashion based on the gap d.

It can be seen that, in a case in which the gap d is formed, output torque (average torque) is increased as compared with the conventional rotor shown in FIG. 2. In addition, it can be seen that a torque ripple value is also reduced.

It can be seen that, as the gap d is gradually increased, an output torque characteristic is improved, and, a torque ripple characteristic is also improved. Also, it can be seen that, in a case in which the gap d is 1 mm, it is possible to obtain the optimum output torque characteristic and the optimum torque ripple characteristic. That is, it can be seen that it is possible to obtain a torque ripple reduction effect of a maximum of 29.9 % and an output torque increase effect of a maximum of 0.9 %.

Consequently, it can be seen that the torque ripple reduction effect and the output torque increase effect are obtained based on the asymmetric structure of the pole shoe based on the gap d. This means that such a satisfactory effect can be obtained without greatly changing the shape of the rotor.

FIG. 13 shows a relationship between torque ripple and average torque in the embodiment shown in FIG. 6.

The optimum results shown in FIG. 13 may be obtained from experimentation carried out in a state in which the length of the slit, the width of the slit, and the angle of the slit with respect to the middle of the tooth body are changed. Specifically, the optimum results are obtained in a case in which the length of the slit is 6.7 mm, the width of the slit is 0.8 mm, and the angle of the slit with respect to the middle of the tooth body is 26.6 degrees.

The experimental results reveal that the output torque is reduced by a maximum of 1.9 %, and the torque ripple value is reduced by a maximum of 33.9 %, as compared with the conventional art. It can be seen that the torque ripple reduction effect of FIG. 13 is greater than that of FIG. 12. On the other hand, it can be seen that the output torque is slightly reduced.

Consequently, a satisfactory torque ripple reduction effect may be obtained through the formation of the slit. This means that a satisfactory effect can be obtained without greatly changing the shape of the rotor.

FIG. 14 shows a relationship between torque ripple and output torque (average torque) in the embodiment shown in FIG. 9.

The optimum results shown in FIG. 14 may be obtained from experimentation carried out in a state in which both the slit and the gap d are applied.

The experimental results reveal that the output torque is reduced by a maximum of 0.2 %, and the torque ripple value is reduced by a maximum of 48.3 %, as compared with the conventional art. In this case, it can be seen that the reduction of output torque is negligible, whereas the torque ripple reduction effect is very remarkable.

That is, the slit may be formed to reduce the torque ripple value, and the pole shoe may be formed in an asymmetrical fashion to compensate the reduction of output torque value due to the slit and to further reduce the torque ripple value.

Consequently, a very satisfactory torque ripple reduction effect and a very satisfactory output torque retention effect may be obtained through the formation of the slit and the gap d. This also means that such very satisfactory effects can be obtained without greatly changing the shape of the rotor.

Meanwhile, although experimental results are not presented, the embodiment shown in FIG. 11 may have effects equivalent to or more satisfactory than the experimental results presented in FIGs. 12 to 14.

According to embodiments of the present invention, it is possible to provide a rotor that is capable of reducing torque ripple, thereby improving performance, and a motor including the same. In particular, it is possible to provide a driving motor for electric vehicles including a field winding rotor having reduced torque ripple.

According to embodiments of the present invention, it is possible to provide a field winding rotor in which the shape of the rotor is not greatly changed to minimize influence from centrifugal force, thereby effectively reducing torque ripple while retaining output torque, and a driving motor for electric vehicles including the same.

According to embodiments of the present invention, it is possible to provide a driving motor for electric vehicles that can be easily controlled and manufactured.

## Claims

1. A coil winding rotor comprising:
a rotor core (23);
a plurality of tooth bodies (21a) extending from the rotor core (23) in a radial direction, the tooth bodies (21a) arranged at the rotor core (23) at equal intervals around a surface of the rotor core (23) in a circumferential direction;
a rotor coil wound (22) on each of the tooth bodies (21a); and
a pole shoe (21b) extending from an end of at least one tooth body (21a) at opposite sides in the circumferential direction, one side of the pole shoe constituting a side that is in a rotational direction of the rotor and other side of the pole shoe constituting a side that is not in the rotational direction of the rotor, **characterized in that**
both sides of the pole shoe (21b) having a curved outer part (21c, 21d) opposite to each other and asymmetric to each other **in that** a radius of curvature of the curved outer part of the one side of the pole shoe (21b) that is in the rotational direction of the rotor has a smaller radius than a radius of curvature of the other side of the pole shoe that is not in the rotational direction of the rotor (20).

2. The coil winding rotor according to claim 1, wherein an extension of the pole shoe located in a rotational direction is relatively short or narrow so that the pole shoe is formed in the asymmetrical fashion.

3. The coil winding rotor according to claim 2, wherein a radial inside of the extension of the pole shoe is formed in an arc shape so that the extension of the pole shoe is narrow.

4. The coil winding rotor according to any one of claims 1-3, wherein the at least one tooth body further comprises a slit (29) extending from the at least one tooth body to the side of the pole shoe that is in the rotational direction of the rotor.

5. The coil winding rotor according to claim 4, wherein a length of the slit is in a range of 1 to 10 mm and a width of the slit (29) is in a range of 0.1 to 5 mm, and an angle between an axis bisecting the slit in a lengthwise direction and an axis bisecting the at least one tooth body in a lengthwise direction is in a range of 0 degree to 90 degrees.

6. The coil winding rotor according to claim 4, wherein the slit (29) is skewed so that the slit is substantially perpendicular to a direction in which magnetic flux flows from the at least one tooth body to the pole shoe.

7. The coil winding rotor according to claim 4, wherein the slit is skewed so that one corner of the slit is closer to a side of the at least one tooth body than any other corners of the slit, and another corner diagonally opposite to the corner of the slit closer to the side of the at least one tooth body is closer to an axis bisecting the at least one tooth body in a lengthwise direction than any other corners of the slit.

8. The coil winding rotor according to claim 4, wherein the at least one tooth body further comprises another slit extending from the at least one tooth body to the side of the pole shoe that is not in the rotational direction of the rotor.

9. The coil winding rotor according to claim 4, wherein a shape of the slit is irregular, or circular or oval.

10. The coil winding rotor according to claim 4, wherein the slit is positioned on the at least one tooth body based on a reduction of the torque ripple, and wherein the torque ripple is reduced when the slit is positioned closer to a side of the at least one tooth body than when compared with the torque ripple when the slit is positioned further from the side of the at least one tooth body.

11. A motor comprising the coil winding rotor according to any one of claims 1 to 10 or an electric vehicle using the motor (1) as a driving motor.

12. An electric vehicle driving apparatus comprising a rotor, wherein the rotor comprises:
a rotor core (23);
a plurality of tooth bodies (21a) extending from the rotor core (23) in a radial direction, the tooth bodies (21a) being formed at the rotor core (23) at equal intervals;
a field coil (22) wound on each of the tooth bodies;
a pole shoe (21b) extending from an end of each of the tooth bodies to opposite sides; and
a slit (29) formed at the pole shoe to increase magnetic resistance, thereby preventing magnetic flux saturation and thus reducing a torque ripple value, the slit being skewed so that a radial outside of the slit is adjacent to a middle of each of the tooth bodies.

13. The electric vehicle driving apparatus according to claim 12, comprising a field winding motor (1) comprising the rotor (20) and a stator (10) having an armature coil (12) wound thereon, wherein the rotor (20) is rotated inside the stator (10).

14. The electric vehicle driving apparatus according to claim 12 or 13, wherein the slit extends to each of the tooth bodies, and the pole shoe is formed in an asymmetrical fashion with respect to the middle of each of the tooth bodies to compensate reduction of a torque value due to the slit and to further reduce the torque ripple value.

15. The electric vehicle driving apparatus according to any one of claims 12 to 14, wherein the pole shoe is formed so that a radial inside and a radial outside of the pole shoe are asymmetric with respect to a middle of each of the tooth bodies, and wherein a radial inside (21d) of the pole shoe (21b) located in a rotational direction of the rotor (20) is formed in an arc shape.
